# EUROPÄISCHE PATENTSCHRIFT

(11) **EP 0 396 932 B1**
(45) Veröffentlichungstag und Bekanntmachung des Hinweises auf die Patenterteilung: **06.07.1994**
(21) Anmeldenummer: 90107097.9
(22) Anmeldetag: 12.04.1990
(51) Int. Cl.: H02G 3/04, H02G 3/06, H01R 13/648

(54) **Einrichtung zum Schutz elektrischer Anlagen**
Device for the protection of electrical installations
Agencement pour la protection d'installations électriques

(30) Priorität: 06.05.1989 DE 3914931
(43) Veröffentlichungstag der Anmeldung: 14.11.1990
(73) Patentinhaber: Daimler-Benz Aerospace Airbus Gesellschaft mit beschränkter Haftung, 21129 Hamburg (DE)
(72) Erfinder: Kirma, Safe, D-2000 Wedel/Holstein (DE)
(74) Vertreter: Hansmann, Dierk, Dipl.-Ing.

(56) Entgegenhaltungen:
- EP-A- 0 048 176
- FR-A- 1 186 907
- FR-A- 2 137 538
- GB-A- 397 661
- GB-A- 527 641
- GB-A- 2 080 010

## Beschreibung

Die Erfindung betrifft eine Einrichtung zum Schutz elektrischer Anlagen gegen elektromagnetische Störungen, insbesondere gegen Überspannungen und Blitzeinwirkungen, mit einem aus elektrisch leitenden Werkstoff, bestehenden Geflecht, das zwischen einzelnen elektrischen Geräten bündelförmig verlegte Leitungen umgibt und das über Anschlußelemente leitend mit Ableitpunkten verbunden ist.

Eine derartige Einrichtung ist aus der FR-A-2137538 bekannt.

Einrichtungen dieser Art werden insbesondere in Flugzeugen benötigt, um auf relativ engem Raum eine große Anzahl elektrischer Geräte mit stark unterschiedlichen Nutzsignalen und Störungsempfindlichkeiten unterzubringen und bei denen die Möglichkeit gegenseitiger Beeinflussung zuverlässig ausgeschaltet sein muß.

Darüber hinaus müssen solche Einrichtungen auch in ihrer Sicherheit die Auswirkungen Blitzeinschläge überstehen, welche sonst elektronische Ausrüstungen stark gefährden.

Aus diesem Grunde stellt es bereits eine bekannte Maßnahme dar, elektrische Verbindungsleitungen in Flugzeugen, insbesondere auch ganze Kabelbäume, mit metallischen Abschirmungen zu versehen und diese Abschirmungen jeweils an ihren Enden mit den Gehäusen der elektrischen Geräte oder mit speziell vorgesehenen Masseleitungen zu verbinden.

Zu diesem Zweck wird üblicherweise ein aus einzelnen Metallitzen bestehendes schlauchförmiges Geflecht verwendet, das, im Fall stromführender Steckerverbindungen, an den Kabelenden mit dem ebenfalls metallischen Steckergehäuse verbunden ist. Häufig erfolgt die Verbindung dieses Geflechtes auch mit den vorgesehenen Ableitpunkten aber über separate Schellen, die an den Kabelenden das Geflecht umgeben und von denen aus ein separater Ableiter der auch als "pig tail" bezeichnet wird, zum Ableitpunkt führt.

Ein Nachteil der bekannten Abschirmeinrichtungen liegt darin, daß die hierbei eingesetzten Anschluß- und Verbindungselemente nicht nur relativ aufwendig in ihrer Herstellung sind und ein vergleichsweise hohes Eigengewicht aufweisen, sondern daß darüber hinaus auch ihre Installation d.h. daß das Herstellen einer mechanisch und elektrisch einwandfreien Verbindung mit dem Abschirmgeflecht, einen beträchtlichen Zeitaufwand erfordert.

Daher ist es Aufgabe der Erfindung, eine Einrichtung der eingangs genannten Art so auszubilden, daß eine erhebliche Einsparung an Gewicht, Herstellungs- und Lagerhaltungskosten ermöglicht und einfach zu installieren ist.

Die Erfindung löst diese Aufgabe durch eine Einrichtung mit den kennzeichnenden Merkmalen des Patentanspruchs 1. Vorteilhafte Weiterbildungen der erfindungsgemäßen Einrichtung, die insbesondere eine möglichst weitgehende Vereinfachung von Herstellung und Montage zum Ziel haben, sind in den weiteren Ansprüchen angegeben.

Im folgenden soll die Erfindung anhand von in der Zeichnung dargestellten Ausführungsbeispielen näher erläutert werden. Es zeigen:
- Fig. 1: einen sich verzweigenden, mit einer Abschirmung sowie mit Anschlußelementen versehenen Kabelbaum in teilweise geschnittener Darstellung,
- Fig. 2 bis 8: verschiedene Anschluß-, Verbindungs- und Verzweigungselemente in teilweise geschnittener Darstellung.

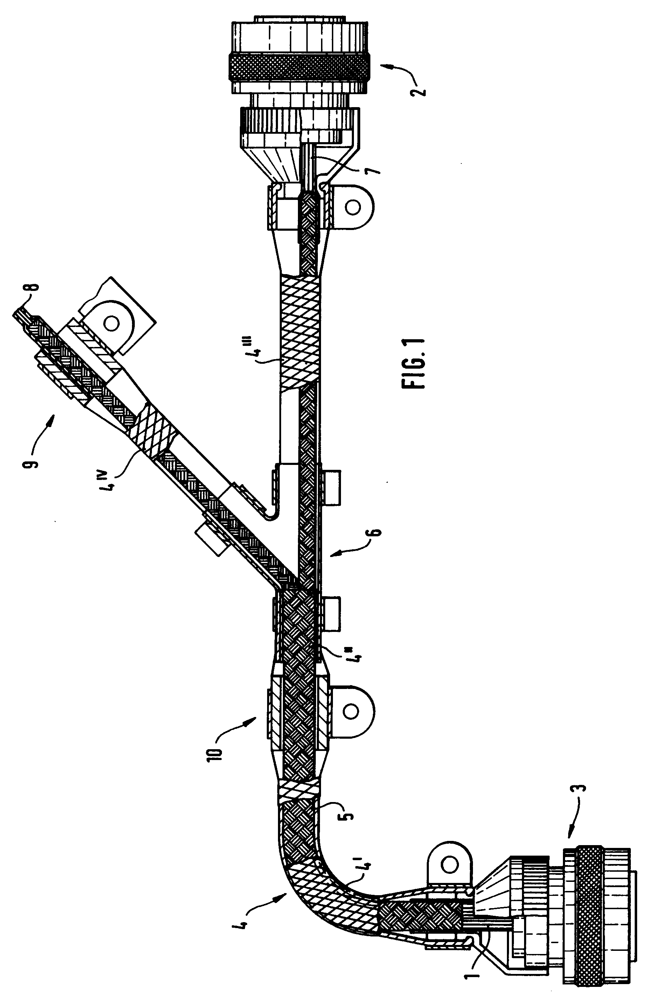

Bei der in Fig. 1 komprimiert bzw. verkürzt dargestellten Anordnung handelt es sich um einen Kabelbaum 1, d.h. um eine Vielzahl von zu einem Bündel zusammengefaßten elektrischen Verbindungsleitungen, die im Fall des hier beschriebenen Ausführungsbeispieles in einem Flugzeug zwischen einzelnen, im Bild nicht dargestellten Komponenten der elektrischen Ausrüstung verlegt sind.

Der Anschluß des Kabelbaumes 1 an diese Geräte erfolgt jeweils über vielpolige Steckverbindungen, wobei der Aufbau der hierfür verwendeten Anschlußelemente 2 bzw. 3 nachfolgend im einzelnen erläutert wird.

Zum Schutz gegen elektromagnetische Störungen, vor allem gegen Überspannungen, wie sie insbesondere als Folge von Blitzeinschlägen auftreten können, ist der Kabelbaum 1 mit einer Abschirmung umgeben, die aus einem Metallgeflecht 4 besteht. Zusätzlich ist, als Schutz gegen Scheuern bzw. andere mechanische Beanspruchungen des Kabelbaumes 1, zwischen diesem und dem Metallgeflecht 4 ein weiterer schlauchförmiger Überzug angeordnet, der aus einem Kunststoffgeflecht 5 besteht. Der Kabelbaum 1 teilt sich an einem Verzweigungselement 6 in zwei getrennt weiterverlaufende Teilstränge 7 und 8 auf, von denen der Verlauf des in der Zeichnung oberen Teilstranges 8 nur bis zu einem Fixierungselement 9 dargestellt ist. Ferner ist bei der in Fig. 1 dargestellten Anordnung noch ein Verbindungselement 10 vorgesehen, mit dessen Hilfe einerseits eine Verbindung zweier getrennter Abschnitte des Metallgeflechtes möglich ist und mit dem andererseits eine zusätzliche, zwischen den Anschlußelementen 2 und 3 angeordnete Masseverbindung hergestellt werden kann. Das als Abschirmung dienende Metallgeflecht 4 besteht in diesem Fall aus insgesamt vier Teilabschnitten, die mit 4 ^{I} bis 4 ^{IV} bezeichnet sind.

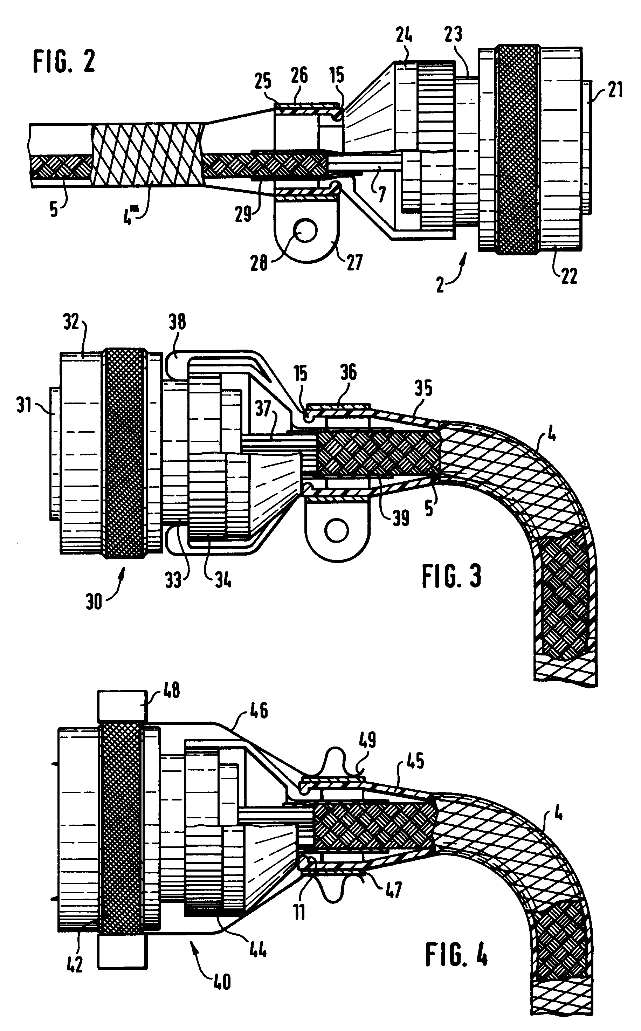

Fig. 2 enthält eine vergrößerte Darstellung des Anschlußelementes 2 aus Fig. 1. Bei diesem handelt es sich um einen vielpoligen Rundsteckverbinder 21 der mittels einer Bajonett- oder Schraubverriegelung 22 an eine, hier nicht dargestellte Gerätedose auskoppelbar ist. Das Gehäuse 23 dieses Steckverbinders 21 ist über eine sich kegelförmig verjüngende Überwurfmutter 24 drehbeweglich mit einer zylindrischen Hülse 25 verbunden, die im Fall des hier dargestellten Ausführungsbeispieles aus zwei Halbschalen besteht. Die Hülse 5 ist hierzu mit ienem in eine Ringnut 11 überwurfmutter 24 eingreifenden Wust 15 versehen. Über diese Hülse 25 ist der aufgeweitete Endbereich des Metallgeflechts 4 in diesem Falle des Abschnittes 4 ^{III} gezogen und auf ihr mittels einer metallischen Spannschelle 26 fixiert. Letztere ist mit einem seitlichen Ansatz 27 versehen, in dem eine Durchgangsbohrung 28 für eine Verschraubung angeordnet ist. Schließlich ist im Inneren der Hülse 25 eine Tülle 29 vorgesehen, die über das Kunststoffgeflecht 5 gezogen ist und die dieses in der Hülse 25 festlegt.

Das Herstellen einer Masseverbindung zwischen dem Metallgeflecht 4 und dem hierfür vorgesehenen Ableitpunkt kann bei dieser Anordnung durch Anschrauben der Spannschelle 26 an einer entsprechenden Masseleitung erfolgen. In diesem Fall ist es möglich, einzelne Komponenten des Anschlußelementes 3, neben der Hülse 25 beispielsweise die Überwurfmutter 24, aus Gründen der Gewichtsersparnis auf einfache Weise aus Kunststoff zu fertigen. Es ist selbstverständlich auch möglich, zu Erzielung eines optimalen Abschirmeffektes das Anschlußelement 3 vollständig aus Metall bzw. aus einem metallisierten oder anderweitig elektrisch leitenden Werkstoff zu fertigen und so eine geschlossene Abschirmung bis zur Gerätedose hin zu gewährleisten.

Das in Fig. 3 dargestellte Anschlußelement 30 ist weitgehend analog zum vorausgehend beschriebenen aufgebaut, mit einem Rundsteckverbinder 31, einer Verriegelung 32, einem Gehäuse 33 sowie einer Überwurfmutter 34. Letztere ist wieder drehbeweglich in einem Übergangsteil als Stützelement 35 gehaltert, das in diesem Fall als Krümmer ausgebildet ist und vorzugsweise aus zwei Halbschalen besteht. Über diesen Krümmer ist das Metallgeflecht 4 gezogen und endseitig wieder mit einer Spannschelle 36 fixiert. Das ankommende Kabelbündel 37 ist auch hier von einem Kunststoffgeflecht 5 umgeben und darüber ist eine Tülle 39 gezogen. Zusätzlich sind bei dieser Anordnung zwei an den konischen Bereich der Überwurfmutter 34 angeformte elastische Sicherungshaken 38 vorgesehen. Diese greifen beim Festziehen der Überwurfmutter 34 hinter das auf dem Gehäuse 33 angeordnete Gewinde, so daß sich die Überwurfmutter 34 von selbst nicht lösen kann. Das Anschlußelement 30 entspricht, mit Ausnahme der Sicherungshaken 38, dem Anschlußelement 3 in Fig. 1.

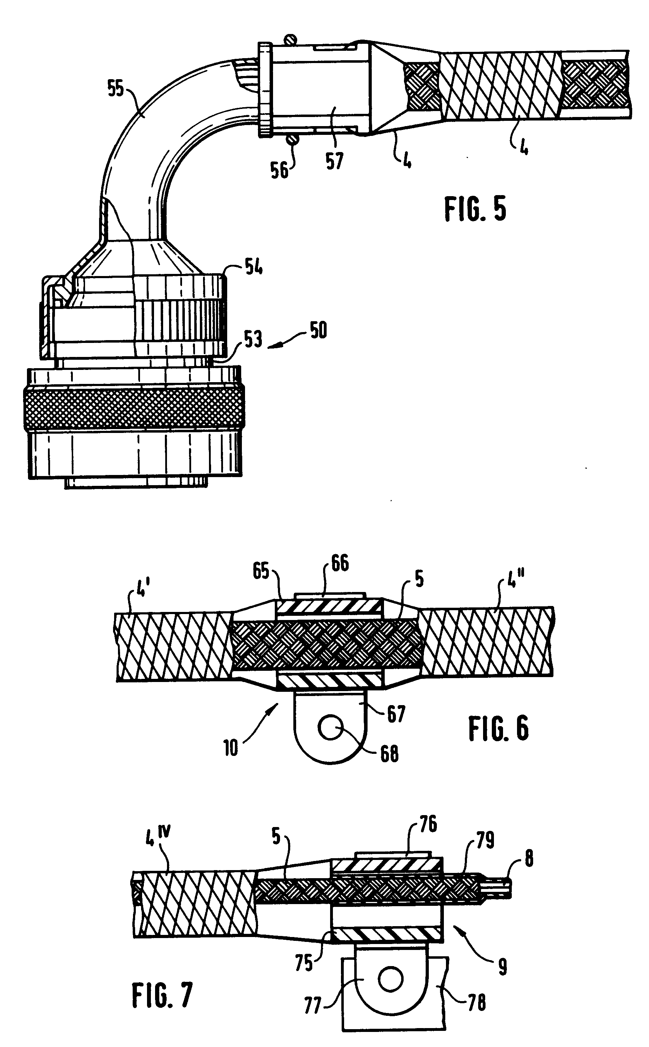

Während biem zuvor erläuterten Anschlußelement 30 die Abschirmung über die Spannschelle 36 vor dem anzuschließenden elektrischen Gerät Masse gelegt ist, erfolgt diese Maßnahme bei dem in Fig. 4 dargestellten Anschlußelement 40 mittels einer metallischen Haube 46. Diese Haube 46 umgibt zusammen mit einem Quetschring 47 den Endbereich des Metallgeflechts 4, das auch in diesem Fall wieder über ein als Krümmer ausgebildetes, zweischalig aufgebautes und aus Kunststoff bestehendes Übergangselement als Stützelement 45 gezogen ist. Das der Gerätedose zugewandte Ende der Haube 46 ist mittels einer Zweiohrklemme 48 auf dem Verriegelungselement 42 fixiert. Im Fall dieses Ausführungsbeispieles können bis auf das Verriegelungselement 42, die Haube 46 und den Quetschring 47, an dem die Haube 46 unter Vorospannung anliegt, sämtliche Komponenten des Anschlußelementes 40 aus einen elektrisch nicht leitenden Kunststoff bestehen. Das auf dem Quetschring 47 aufliegende Ende der Haube 46 ist mit einer Reihe von Längsschlitzen versehen, wodurch die äußeren Enden als Kontaktfedern 49 wirken.

Bei dem in Fig. 5 dargestellten Anschlußelement 50 ist ein aus einem elektrisch leitenden Werkstoff bestehender, aus zwei Halbschalen gebildeter Krümmer 55 mittels einer Überwurfmutter 54 am Gehäuse 53 des Anschlußelementes 50 fixiert. An den Krümmer 55 schließt sich ein Übergangsteil als Stützelement 57 an, das ebenfalls aus einem elektrisch leitenden Werkstoff besteht, sich einseitig konisch verjüngt und über das das Metallgeflecht 4 gezogen ist. Als Spannelement dient in diesem Fall ein Schrumpfring 56, der aus einer sogenannten Formgedächtnislegierung (shape memory alloy) besteht. Hier besteht die Drehbeweglichkeit zwischen dem Gehäuse 53 und dem Krümmer 55.

Die Abbildung gemäß Fig. 6 zeigt denjenigen Teilbereich des Kabelbaumes 1, in dem das Verbindungselement 10 angeordnet ist, das die beiden Abschnitte 4 ^{I} und 4 ^{II} des Metallgeflechtes 4 miteinander verbindet. Dieses Verbindungselement 10 besteht aus einer Kunsstoffhülse 65, die mit Endbereichen jeweils zwischen das Metallgeflecht und das Kunststoffgeflecht 5 geschoben ist. Die beiden Abschnitte 4 ^{I} und 4 ^{II} des Metallgeflechtes 4 sind so weit auf die Kunsstoffhülse 65 geschoben, daß sie sich praktisch berühren. In dieser Position werden beide Abschnitte 4^{I}, 4^{II} durch eine übergestreifte Spannschelle 66, die in einem Ansatz 67 eine Durchgangsbohrung 68 aufweist, fixiert. Auf diese Weise kann im Bereich des Verbindungselementes 10 zugleich ein zusätzlicher Masseanschluß zur Abschirmung erfolgen. Sofern ein solcher Masseanschluß nicht erforderlich ist, kann an dieser Stelle als Spannelement für das Metallgeflecht 4 auch ein Quetschring, eine Zweiohrklemme oder ein ähnliches Element anstelle einer Spannschelle 66 vorgesehen werden.

Die Darstellung gemäß Fig. 7 zeigt eine ähnliche Anordnung wie die zuvor erläuterte, wobei es sich um das Fixierungselement 9 handelt, das am äußeren Endbereich des Teilabschnittes 4 ^{IV} des Metallgeflechtes 4 angeordnet ist und in diesem Fall den Zweig 8 des Kabelbaumes 1 umgibt. Dieses Fixierungselement 9 besteht aus einer sich einseitig konisch verjüngenden Kunsstoffhülse 75, auf der, wieder durch eine Spannschelle 76, der Endbereich des Metallgeflechts 4 fixiert ist. Der Ansatz 77 der Spannschelle 76 ist dabei zugleich mit einem metallischen Teil 78 der Flugzeugstruktur verbunden. Die Faserenden des Kunststoffgeflechtes 5 sind mittels eines Schrumpfschlauches 79 festgelegt.

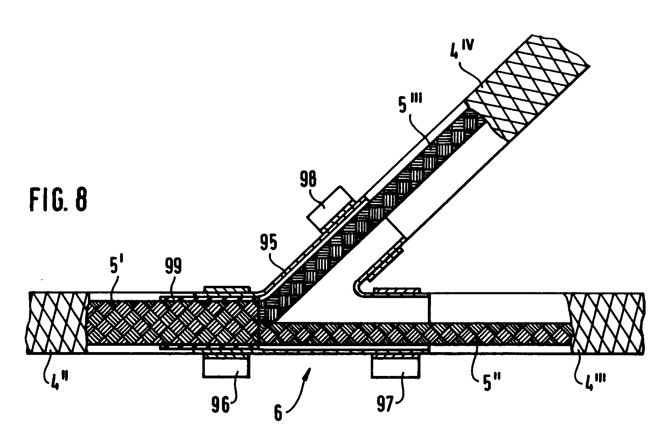

Bei der Anordnung gemäß Fig. 8 ist eine elektrische Abschirmung für das Verzweigungselement 90 dargestellt, das in diesem Fall aus einem elektrisch leitenden Material besteht und dessen Gehäuse 95 sowohl einteilig als auch zweiteilig ausgebildet sein kann. Bei diesem Verzweigungselement sind die Endbereiche der Abschnitte 4 ^{II}, 4 ^{III} und 4 ^{IV} des metallischen Abschirmgeflechtes 4 mittels Einohrklemmen 96 bis 98 am Gehäuse 95 fixiert. Das ankommende Ende 5 ^{I} des Kunststoffgeflechtes 5 ist hier in einer Tülle 99 festgelegt.

## Patentansprüche

1. Einrichtung zum Schutz elektrischer Anlagen gegen elektromagnetische Störungen, insbesondere gegen Überspannungen und Blitzeinwirkungen, mit einem aus elektrisch leitenden Werkstoff bestehenden Geflecht (4), das zwischen einzelnen elektrischen Geräten bündelförmig verlegte Leitungen umgibt und das über Anschlußelemente (2, 3, 30, 40, 50) leitend mit Ableitpunkten verbunden ist, dadurch gekennzeichnet, daß die Anschlußelemente (2, 3, 30, 40, 50) ein bewegliches Übergangsteil als austauschbares Stützelement (25, 35, 45, 55) aufweisen zur Aufnahme des Endbereiches des metallischen Geflechtes (4) sowie mit einem Spannelement (26, 36, 47, 56) zum Fixieren des Geflechtes (4) und daß zwischen dem metallischen Geflecht (4) und dem Kabelbündel (1) ein Kunststoffgeflecht (5) als Scheuerschutz angeordnet ist.

2. Einrichtung nach Anspruch 1, dadurch gekennzeichnet, daß zusätzliche Verbindungselemente (10), sowie Fixierungselemente (9) vorgesehen sind, die jeweils ein aus Halbschalen bestehendes Stützelement (65, 75) sowie wenigstens ein Spannelement (66, 76), aufweisen.

3. Einrichtung nach Anspruch 1, bei der die Anschlußelemente als vielpolige Rundsteckverbinder ausgebildet sind, dadurch gekennzeichnet, daß das Gehäuse (23, 33, 53) des Anschlußelementes drehbeweglich mit dem Übergangsteil (25, 35, 45, 57) verbunden ist.

4. Einrichtung nach Anspruch 3, dadurch gekennzeichnet, daß das Übergangsteil (35,45,55) als ein den Verlauf des Kabelbündels (1, 7, 8, 37) fixierendes Formteil ausgebildet ist.

5. Einrichtung nach Anspruch 3 oder 4, dadurch gekennzeichnet, daß zumindest Teile der Anschlußelemente (2, 3, 30, 40, 50 ), wie Überwurfmuttern (24, 34, 54), aus einem elektrisch nicht leitenden Kunststoff bestehen.

6. Einrichtung nach Anspruch 5, dadurch gekennzeichnet, daß die Überwurfmutter (24) eine sich kegelförmig verjungende Form mit einer Ringnut (11) besitzt und daß in die Ringnut ein Wulst (45) einer drehbeweglichen den Kabelbaum umgebenden Hülse (5, 25, 35, 45) eingreift.

7. Einrichtung nach einem der Ansprüche 1 bis 6, dadurch gekennzeichnet, daß die Stüzelemente (35, 45) aus einem Kunststoff bestehen und daß ihre dem Metallgeflecht (4) zugewandten Endbereiche sich konisch verjüngt.

8. Einrichtung nach einem der Ansprüche 1 bis 7, dadurch gekennzeichnet, daß als Spannelemente metallische Spannschellen (26, 36, 66, 76) vorgesehen sind.

9. Einrichtung nach einem der Ansprüche 1 bis 7, dadurch gekennzeichnet, daß als Spannelemente Quetschringe (47) vorgesehen sind.

10. Einrichtung nach einem der Ansprüche 1 bis 7, dadurch gekennzeichnet, daß als Spannelemente Schrumpfringe (56) vorgesehen sind, die aus einer Formgedächtnis-Legierung bestehen.

11. Einrichtung nach einem der Ansprüche 1 bis 10, dadurch gekennzeichnet, daß der elektrische Kontakt zwischen dem Metallgeflecht (4) und einem Anschlußelement (2,3,30,40,50) mittels einer geschlossenen Haube (46) erfolgt, die einerseits mit einer Klemme (48) an Anschlußelement (2,3,30,40,50) elektrisch leitend befestigt ist und andererseits Kontaktfedern (49) aufweist, welche das Spannelement (47) zum Fixieren des Geflechtes (4) unter Vorspannung einklemmen.

12. Einrichtung nach einem der Ansprüche 1 bis 11, dadurch gekennzeichnet, daß das Stützelement (95) als aus zwei Halbschalen bestehendes Verzweigungsteil (90) ausgebildet ist.

13. Einrichtung nach einem der Ansprüche 1 bis 12, dadurch gekennzeichnet, daß die Stüzelemente (25, 35, 45, 55, 57) aus zwei Halbschalen gebildet sind.

14. Einrichtung nach einem der Ansprüche 1 bis 13, dadurch gekennzeichnet, daß die Halbschalen durch Teilung im Bereich der Symmetrieebene gebildet sind.

## Claims

1. Device for the protection of electrical installations against electromagnetic disturbances, in particular against overvoltages and the effects of lightning, having a braiding (4) made of electrically conductive material, which surrounds cables laid in bundles between individual electrical appliances and which via connector elements (2, 3, 30, 40, 50) is conductively connected to discharge points, characterized in that the connector elements (2, 3, 30, 40, 50) have a movable transition part as an exchangeable supporting element (25, 35, 45, 55) for receiving the end region of the metal braiding (4) as well as having a clamping element (26, 36, 47, 56) for fixing the braiding (4) and that a plastics braiding (5) is disposed as an anti-chafing device between the metal braiding (4) and the cable bundle (1).

2. Device according to claim 1, characterized in that additional connection elements (10) as well as fixing elements (9) are provided, which each have a supporting element (65, 75) formed by half shells as well as at least one clamping element (66, 76).

3. Device according to claim 1, wherein the connector elements take the form of multi-pole circular connectors, characterized in that the housing (23, 33, 53) of the connector element is rotatably connected to the transition part (25, 35, 45, 57).

4. Device according to claim 3, characterized in that the transition part (35, 45, 55) takes the form of a moulded part which fixes the course of the cable bundle (1, 7, 8, 37).

5. Device according to claim 3 or 4, characterized in that at least parts of the connector elements (2, 3, 30, 40, 50), such as union nuts (24, 34, 54), are made of an electrically non-conductive plastics material.

6. Device according to claim 5, characterized in that the union nut (24) has a conically tapering shape with an annular groove (11) and that a bead (45) of a rotatable sleeve (5, 25, 35, 45) surrounding the cable harness engages into the annular groove.

7. Device according to one of claims 1 to 6, characterized in that the supporting elements (35, 45) are made of a plastics material and that their end regions at the metal braiding (4) side taper.

8. Device according to one of claims 1 to 7, characterized in that metal clamping clips (26, 36, 66, 76) are provided as clamping elements.

9. Device according to one of claims 1 to 7, characterized in that crimping rings (47) are provided as clamping elements.

10. Device according to one of claims 1 to 7, characterized in that shrink rings (56) which are made of a shape-memory alloy are provided as clamping elements.

11. Device according to one of claims 1 to 10, characterized in that the electric contact between the metal braiding (4) and a connector element (2, 3, 30, 40, 50) is effected by means of a closed cover (46) which at one end is fastened in an electrically conductive manner by a terminal (48) to connector element (2, 3, 30, 40, 50) and at the other end has contact springs (49), which clamp in the clamping element (47) for fixing the braiding (4) under pre-tension.

12. Device according to one of claims 1 to 11, characterized in that the supporting element (95) takes the form of a junction part (90) comprising two half shells.

13. Device according to one of claims 1 to 12, characterized in that the supporting elements (25, 35, 45, 55, 57) are formed by two half shells.

14. Device according to one of claims 1 to 13, characterized in that the half shells are formed by splitting in the region of the plane of symmetry.

## Revendications

1. Installation pour protéger les ensembles électriques contre des parasites électromagnétiques, notamment contre les surtensions et les éclairs, avec un treillis (4) en matière conductrice d'électricité qui entoure les conducteurs en forme de faisceaux reliant les différents appareil électriques et qui est reliée par des éléments de raccordement (2, 3, 30, 40, 50) de manière conductrice à des points de sortie, installation caractérisée en ce que les éléments de raccordement (2, 3, 30, 40, 50) comportent une pièce de jonction formée d'un élément de renforcement échangeable (25, 35, 45, 55) pour recevoir les zones d'extrémité du treillis métallique (4) ainsi qu'un élément de serrage (26, 36, 47, 56) pour fixer le treillis (4) et en ce qu'entre le treillis métallique (4) et le faisceau de câbles (1) se trouve un tissu en matière plastique (5) comme moyen de protection contre l'abrasion.

2. Installation selon la revendication 1, caractérisée en ce que des éléments de liaison supplémentaires (10) ainsi que des éléments de fixation (9) sont prévus et comportent chaque fois un élément de renforcement (65, 75) formé de demi-coquilles et d'au moins un élément de serrage (66, 76).

3. Installation selon la revendication 1, selon laquelle les éléments de raccordement sont des connecteurs enfichables, ronds, quadripolaires, caractérisée en ce que le boîtier (23, 33, 53) de l'élément de raccordement est relié de manière mobile en rotation à la pièce de jonction (25, 35, 45, 57).

4. Installation selon la revendication 3, caractérisée en ce que la pièce de jonction (35, 45, 55) est une pièce moulée fixant le tracé du faisceau de câbles (1, 7, 8, 37).

5. Installation selon la revendication 3 ou 4, caractérisée en ce qu'au moins des parties des éléments de raccordement (2, 3, 30, 40, 50) tels que des écrous chapeaux (24, 34, 54) sont en matière plastique non conductrice d'électricité.

6. Installation selon la revendication 5, caractérisée en ce que l'écrou chapeau présente une forme diminuant de manière tronconique avec une rainure annulaire (11) recevant un bourrelet (45) d'une douille (5, 25, 35, 45) entourant le faisceau de câbles libre en rotation.

7. Installation selon l'une des revendications 1 à 6, caractérisée en ce que les éléments de renforcement (35, 45) sont en matière plastique et leur zone d'extrémité tournée vers le treillis métallique (4) se rétrécit de façon conique.

8. Installation selon l'une des revendications 1 à 7, caractérisée en ce que l'élément de serrage est constitué par les colliers métalliques de serrage (26, 36, 66, 76).

9. Installation selon l'une des revendications 1 à 7, caractérisée en ce que les éléments de serrage sont des anneaux à écrasement (47).

10. Installation selon l'une des revendications 1 à 7, caractérisée en ce que les éléments de serrage sont des anneaux rétractables (56) en un alliage à mémoire de forme.

11. Installation selon l'une des revendications 1 à 10, caractérisée en ce que le contact électrique entre le treillis métallique (4) et un élément de raccordement (2, 3, 30, 40, 50) est assuré par un capot fermé (46) lui-même fixé par une borne (48) à un élément de raccordement (2, 3, 30, 40, 50) électriquement conducteur et comporte par ailleurs des ressorts de contact (49) qui serrent l'élément de serrage (47) pour bloquer le treillis (4) en précontrainte.

12. Installation selon l'une des revendications 1 à 11, caractérisée en ce que l'élément d'appui (95) est constitué par une pièce de dérivation (90) formée de deux demi-coquilles.

13. Installation selon l'une des revendications 1 à 12, caractérisée en ce que les éléments de renforcement (25, 35, 45, 55, 57) sont constitués de deux demi-coquilles.

14. Installation selon l'une des revendications 1 à 13, caractérisée en ce que les demicoquilles sont formées par division dans le plan de symétrie.
